Europäisches Patentamt

European Patent Office

Office européen des brevets

(19)

(11) **EP 1 223 129 A1**

## (12) EUROPEAN PATENT APPLICATION

(43) Date of publication:
**17.07.2002 Bulletin 2002/29**

(51) Int Cl.⁷: **B65G 67/02**, B65G 61/00

(21) Application number: **02000404.0**

(22) Date of filing: **07.01.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.01.2001 JP 2001006630**

(71) Applicant: **Murata Kikai Kabushiki Kaisha Minami-ku, Kyoto-shi, Kyoto 601 (JP)**

(72) Inventor: **Tanaka, Hiroshi Kani-shi, Gifu (JP)**

(74) Representative: **Liedl, Christine et al c/o Hansmann & Vogeser, Albert-Rosshaupter-Strasse 65 81369 München (DE)**

### (54) Conveyor system

(57) The present invention relates to a conveyor system (2), connecting a tip conveyor (16) freely moving to back and forth, up and down, and right and left to a conveyor (12) in the base side, having a distance sensor (46) for measuring a distance to a work position, a heading means for heading the distance sensor for the work position and a means for determining a coordinate of the work position from the previously obtained distance and the moving range of the distance sensor (Fig. 2).

## FIG. 2

EP 1 223 129 A1

# Description

Field of the Invention

The present invention relates to a conveyor system for loading and unloading articles from and to the truck or the rack etc.. More particularly, the present invention relates to the input of the work position to the conveyor system.

Background of the Invention

The conveyor system for unloading articles loaded to the truck etc. by ones is known. The work position has to be indicated one by one in this case, however the input of the work position is troublesome for us. If the cardboard boxes are unloaded from the truck, for example, they are unloaded while the conveyor system is transferred to the position suitable for the work. If it is stuck at the input of the work position, the work efficiencies in the cases of utilizing the system and of not utilizing it are much the same, so that the inventor has considered how to be able to input the work position to the conveyor system easier and it comes to the present invention.

It is a basic object of the present invention to be able to find the work position surely.

It is another object of the present invention to provide the simple and easy mechanism for heading the distance sensor for the work position.

It is still further of the present invention to improve the work efficiency by being able to indicate the work position easily.

Summary of the Invention

According to the present invention, the conveyor system, connecting the tip conveyor freely moving back and forth, up and down, and right and left to the conveyor in the base side, characterizes in having the distance sensor for measuring the distance to the work position, a heading means for heading the distance sensor for the work position and a means for determining the coordinate of the work position from the previously obtained distance and the moving range of the distance sensor. The distance sensor includes the ultrasonic distance sensor and the compound eye camera utilizing the triangulation method etc. besides the laser range finder etc.. The laser range finder is needed to be heading the range finder for the work position in finding the range, and in case of utilizing the ultrasonic distance sensor and the compound eye camera etc., the accuracy of the range-finding may be obtained when the work position is in front of the sensor or the camera, so that the accuracy is deteriorated and the compensation is needed if the work position is going apart from the front.

For example, the distance sensor may be installed in the X-Y table and transferred on the opposed surface to the work position and heading the sensor for the work position, but the large X-Y table is needed in this way and the large space for the heading means of the distance sensor is needed in the conveyor system. So preferably, the heading means is arranged to be composed such as to make the distance sensor rotate horizontally and vertically.

It is also preferable that the image recognition part is provided for taking the image in the vicinity of the work position and recognizing the work position and the distance sensor may be headed for by the output from the image recognition part. The recognition of the work position in the image recognition part is done by that the work position is indicated by the laser pointer etc. and recognized in the image recognition part, the work position is indicated by the mouse etc. to the image in the image recognition part and recognized and the image recognition part recognizes the work position from top of the image without inputting manually according to the prescribed rule.

Brief Description of the Drawings

Figure 1 is a plain view of a conveyor system in an embodiment of the present invention.
Figure 2 is a side view of the conveyor system in the embodiment of the present invention.
Figure 3 is a side view showing the laser range finder on the table in the embodiment of the present invention.
Figure 4 is a diagram showing the indication of the work position utilizing the laser pointer.
Figure 5 is a diagram showing the indication of the work position by the mouse.
Figure 6 is a diagram showing the indication of the work position by the joystick.
Figure 7 is a flow chart showing the algorithm of the cargo work in the embodiment of the present invention.
Figure 8 is a diagram showing the coordinate calculation of the work position in the embodiment of the present invention.

Detailed Description of the Preferred Embodiment

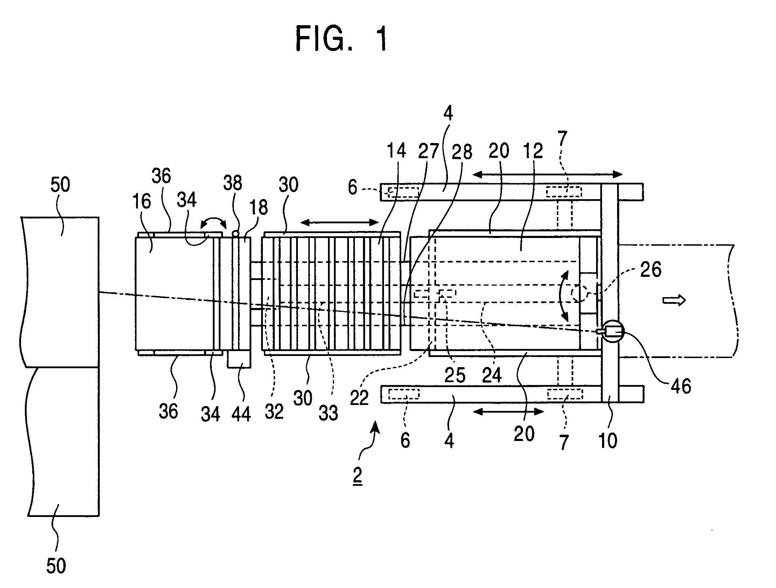

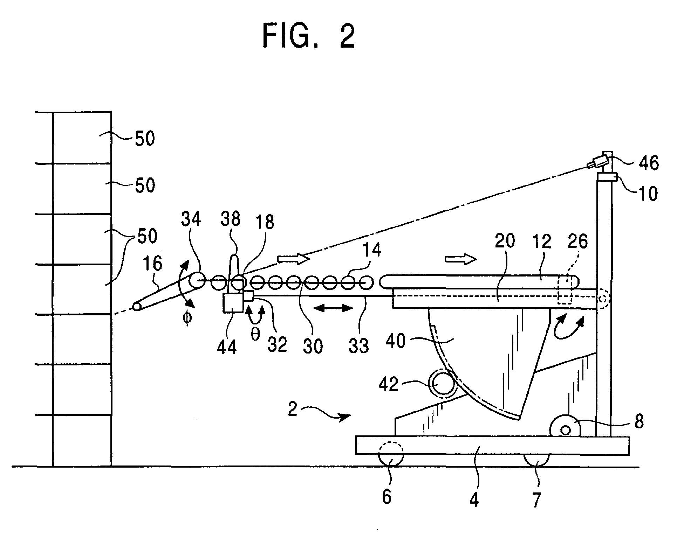

Figures 1~8 illustrate embodiments and the variations. Figures 1 and 2 show the structure of a conveyor system 2, wherein 4, 4 are frames in a base part, 6, 6 are driving wheels, 7, 7 are traveling wheels, 8 is a traveling motor and the conveyor device 2 may be traveling freely. 10 is an upper frame, 12 is a base-part conveyor comprising a belt conveyor and a roller conveyor etc. and 14 is a central roller conveyor whose length may be freely extended by pantographs 30, 30 etc.. 16 is a tip conveyor utilizing a belt conveyor etc. and 18 is a central conveyor between the tip conveyor 16 and the roller conveyor 14.

Frames 20, 20 provided in the lower part of the base-part conveyor 12, installed in the upper frame 10 freely rotatably on the vertical surface, rotates on the vertical surface along with the base-part conveyor 12. A guide 22 connected to the frame 20 and a guide 24 positioned in the bottom etc. of the base-part conveyor 12 are connected by a joint 25. An axis 26 is rotated by the motor (not shown in the drawings), so that the base-part conveyor 12 may be rotated on the horizontal surface through the joint 25 centering the axis 26. Parallel links 27, 28 are provided for not changing the directions of the conveyors 16, 18 even if the base-part conveyor 12 is rotated.

Pantographs 30, 30 extend the roller conveyor 14 and a revolving drive part 32 may rotates the conveyors 16, 18 centering an axis 33 provided in the lower part of the conveyor 14. In Figure 2, the rotating angle centering the axis 33 is illustrated as $\theta$. A scoop axis 34 rotates the tip conveyor 16 centering this axis. The rotating angle in scooping is illustrated as $\phi$ in Figure 2. 40 and 42 are gears in Figure 2, wherein the motor (not shown in the drawings) drives a gear 42 and rotates a gear 40, so that the direction of the frame 20 is changed on the vertical surface and the tip conveyor 16 is hoisting. Additionally, the base-part conveyor 12, connected to the other conveyor etc. indicated by the chain line in Figure 1, makes easier to carry in and out articles. An emergency stop switch 36 is provided on the both sides of the tip conveyor 16, which stops the conveyor system 2 if someone touches the emergency stop switch 36. Further, 38 is a warning light for indicating the operation and 44 is an operation panel.

A laser range finder 46 as an example of a distance sensor is provided on the top part of the upper frame 10, which may rotate two ways, namely the rotations around the vertical axis (pan) and the horizontal axis (hereafter called tilt in tilting), by the built-in motor. The direction of the work position is found from the moving range for the laser range finder 46 heading for the work position, so that the coordinate of the work position to the conveyor system 2 is determined along with the distance to the work position.

The freedom of movement of the conveyor system 2 in the embodiment will be described.

Frames 4, 10, 20 etc. support conveyors 12~18 and the frame 20 goes up and down utilizing the gears 40, 42 and the tip conveyor 16 is made to move right and left by the rotation centering the axis 26. The direction of the tip conveyor 16 is controlled by the rotation of the tip conveyor 16 by the revolving drive part 32 and the scoop movement centering the axis 34. Moreover, the tip conveyor 16 is moved back and forth utilizing the pantograph 30. The conveyor system 2 not only pick up articles automatically by advancing the tip conveyor 16 into the gap between articles but also may be utilized in piling up articles by manpower by carrying articles automatically. 50 is an article for picking up, namely the cardboard boxes etc. which is piled up on the bed of the truck regularly, for example.

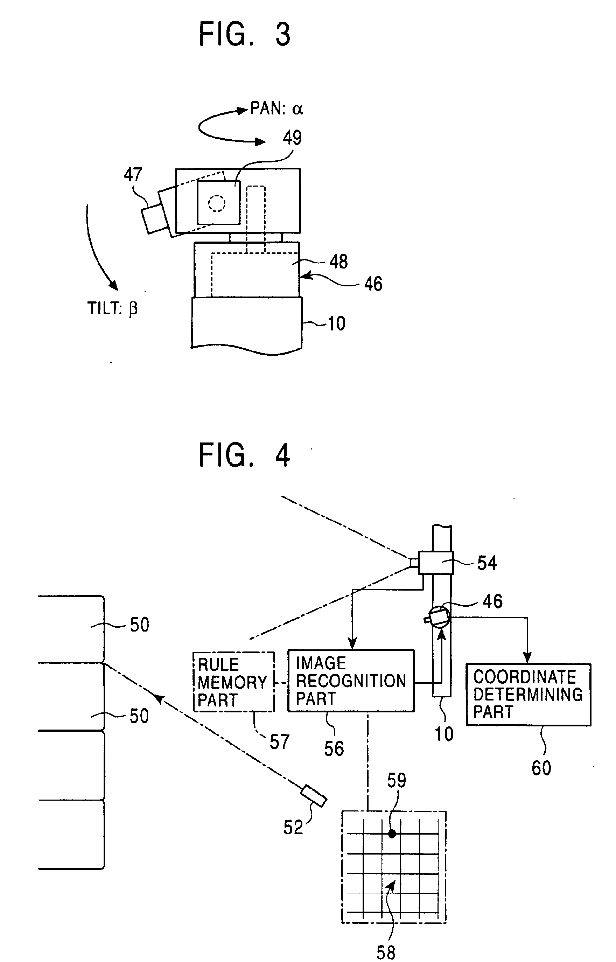

Figure 3 illustrates the rotating mechanism of the laser range finder 46. A main body 47 of the laser range finder 46, projecting the laser on the article 50, finds the range from the reflected light to the article 50. 48 is a pan motor and 49 is a tilt motor and the rotating angle on the horizontal surface from the vertical direction to the upper frame 10 is called a pan angle $\alpha$ and the rotating angle from the front side of the upper frame 10 to the vertical direction is called a tilt angle $\beta$.

Figure 4 illustrates the indication of the direction of the work position to the laser range finder 46. 52 is a laser pointer, 54 is an appropriate camera, 56 is an image recognition part and 60 is a coordinate determining part. The camera 54 takes an image 58 including the irradiation point of the laser from the laser pointer 52, for example the image 58 is acquired, wherein an indicated position 59 is existed, which the indicated position 59 is recognized from the image 58 and the direction for rotating the laser range finder 46 is determined. The laser range finder 46 rotates according to this direction and the coordinate determining part 60 determines the coordinate of the work position from the previously obtained distance and the direction.

Additionally, when a rule memory part 57 is requested in the image recognition part 56, which memorizes the order rule of the pickup, for example the next layer is processed after picking up articles in the order from upper right to upper left, the border between the article to pick up and the article below it may be recognized as the work position from the image 58, so that the indication of the work position may be done full automatically.

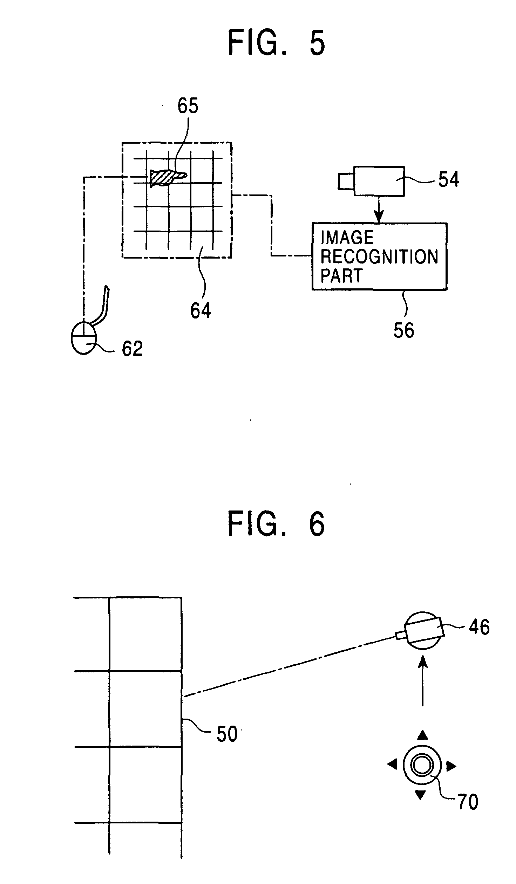

Figures 5 and 6 illustrate the variation of the indication of the work position and the composition is same as the one in Figure 4 other than the points especially pointed out. In the variation in Figure 5, the input means like mouse 62 indicates an indicated point 65 to an image 64 taken by the camera 54. This example is suitable for indicating in the remote monitor room etc. to the image 64, by operating the conveyor system in the harsh environment such as cold storage.

Figure 6 is an example that the direction of the laser range finder 46 is controlled directly, utilizing a joystick 70. Though it may be utilized like this, the worker is interrupted in indicating the work position, as the indication of the work position is troublesome compared with the laser pointer.

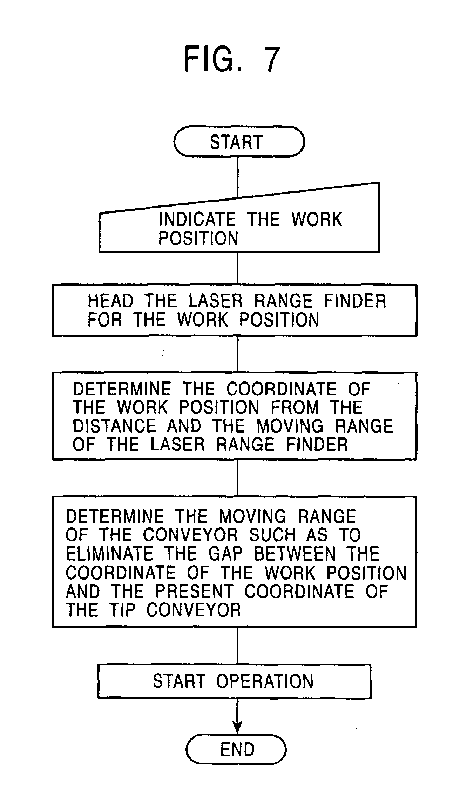

Figure 7 illustrates the procedure from the indication of the work position to the execution of the cargo work. The direction of the work position is indicated as shown in Figures 4~6, and the laser range finder 46 rotates such as to beheading for the indicated work position. The coordinate of the work position is determined from the previously obtained distance and the rotating amount (the direction of the work position) for rotating the laser range finder 46. Next, the moving range of the tip conveyor 16 for moving back and forth, up and down and right and left is determined to move and the cargo work is executed such as to eliminate the gap between the coordinate of the work position and the present coordinate of the tip conveyor 16.

Before starting the next work, the laser range finder 46 is heading for the suitable position for the previously working article, and the tip conveyor 16 is in the suitable position for the previously working articles. When the coordinate of the next work position is found, the difference to the previous coordinate becomes the moving range of the tip conveyor 16.

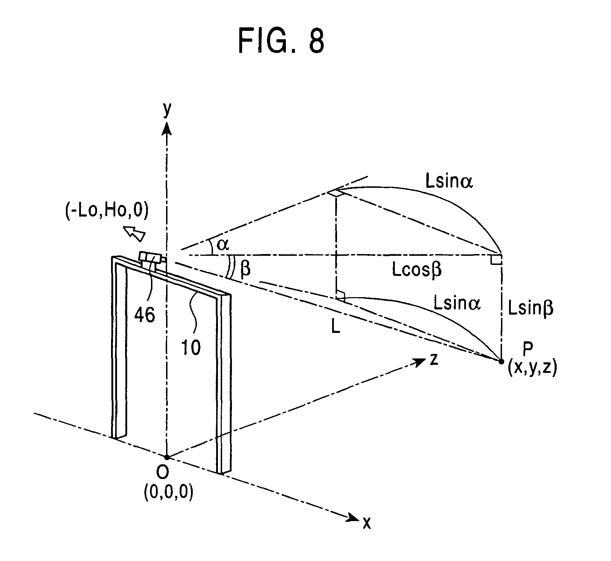

Figure 8 illustrates the determination of the coordinate of the work position, which the x-axis is heading for the direction along the upper frame 10, the y-axis is heading for the upper part to the vertical direction and the z-axis is heading for the front part of the conveyor system 2 and the point 0 of the origin of the coordinates is located in the lower part etc. of the center to the x-axis direction of the upper frame 10. The offset coordinate of the laser range finder 46 becomes $(-L_o, H_o, 0)$, which $L_o$ is the distance from the center of the upper frame 10 of the laser range finder 46 and $H_o$ is the height of the upper frame 10. When the distance to a work position P is L and the pan angle is $\alpha$ and the tilt angle is $\beta$, the change portion to the y-axis direction becomes $L\sin\beta$ and the change portion to the x-axis direction becomes $L\sin\alpha$ and the distance to the work position projected to the x-z plane becomes $L\cos\beta$. Therefore, the coordinate of the work position P is found by utilizing the following formula :

$$P = (L\sin\alpha - L_o, H_o - L\sin\beta, L(\cos^2\beta - \sin^2\alpha)^{1/2})$$

In the embodiment, the work position may be easily indicated and the coordinate of the work position may be found surely, so that the work like picking up becomes easy. Moreover, the laser range finder 46 may be heading for the work position easily and the work position may be input by the mouse 62 etc. utilizing remote control or may be indicated by the laser pointer 52 etc. easily.

According to the present invention, the distance is measured by the distance sensor heading for the work position, and the coordinate of the work position is determined by the previously obtained distance and the moving range for heading the distance sensor for the work position. Therefore, the coordinate of the work position to the conveyor system may be found surely and the cargo work becomes precise.

According to the present invention, the distance sensor rotates on the horizontal surface and the vertical surface, so that the distance sensor may be heading for the work position by rotating around two axes. Moreover, since the axes are heading for the vertical direction and the horizontal direction, the process for finding the coordinate from the moving range may be also easy.

According to the present invention, the distance sensor is headed for by recognizing the work position from the image, providing the image recognition part, so that the indication of the work position becomes easy compared with the case of inputting the moving direction of the distance sensor by the worker directly. Additionally, it has the effect such that the working property may be improved or that the conveyor system may be easily operated by the remote control.

**Claims**

1. A conveyor system, connecting a tip conveyor freely moving to back and forth, up and down, and right and left to a conveyor in the base side, characterizes in having a distance sensor for measuring a distance to a work position, a heading means for heading the distance sensor for the work position and a means for determining a coordinate of the work position from the previously obtained distance and the moving range of the distance sensor.

2. A conveyor system according to Claim 1, characterizes in that the heading means is composed such that the distance sensor rotates horizontally and vertically.

3. A conveyor system according to Claim 1 or Claim 2, characterizes in that an image recognition part is provided for taking an image in the vicinity of the work position and recognizing the work position and the distance sensor may be headed for by an output from the image recognition part.

# FIG. 1

EP 1 223 129 A1

# FIG. 2

# FIG. 3

PAN: α

49

47

48

46

TILT: β

10

# FIG. 4

54

46

50

RULE MEMORY PART

IMAGE RECOGNITION PART

COORDINATE DETERMINING PART

50

57

56

10

60

52

59

58

# FIG. 5

IMAGE
RECOGNITION
PART

65

54

64

62

56

# FIG. 6

46

50

70

# FIG. 7

START

INDICATE THE WORK POSITION

HEAD THE LASER RANGE FINDER FOR THE WORK POSITION

DETERMINE THE COORDINATE OF THE WORK POSITION FROM THE DISTANCE AND THE MOVING RANGE OF THE LASER RANGE FINDER

DETERMINE THE MOVING RANGE OF THE CONVEYOR SUCH AS TO ELIMINATE THE GAP BETWEEN THE COORDINATE OF THE WORK POSITION AND THE PRESENT COORDINATE OF THE TIP CONVEYOR

START OPERATION

END

# FIG. 8

European Patent Office

**EUROPEAN SEARCH REPORT**

Application Number

EP 02 00 0404

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 299 912 A (STAEGE RUDIGER) 18 January 1989 (1989-01-18) * the whole document * | 1-3 | B65G67/02 B65G61/00 |
| | | | **TECHNICAL FIELDS SEARCHED** (Int.Cl.7) |
| | | | B65G |

The present search report has been drawn up for all claims

| Place of search | Date of completion of the search | Examiner |
|---|---|---|
| MUNICH | 6 May 2002 | Hillebrand, A |

EPO FORM 1503 03.82 (P04C01)

## ANNEX TO THE EUROPEAN SEARCH REPORT
## ON EUROPEAN PATENT APPLICATION NO.

EP 02 00 0404

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2002

| Patent document cited in search report | Publication date | Patent family member(s) | Publication date |
|---|---|---|---|
| EP 0299912 A | 18-01-1989 | DE 3723794 A1 | 26-01-1989 |
| | | AT 63526 T | 15-06-1991 |
| | | DD 271889 A5 | 20-09-1989 |
| | | DE 3862820 D1 | 20-06-1991 |
| | | WO 8900540 A1 | 26-01-1989 |
| | | DK 127389 A | 03-05-1989 |
| | | EP 0299912 A1 | 18-01-1989 |
| | | GR 3001957 T3 | 23-11-1992 |
| | | SU 1830042 A3 | 23-07-1993 |

EPO FORM P0459

For more details about this annex : see Official Journal of the European Patent Office, No. 12/82